# EUROPÄISCHE PATENTANMELDUNG

(11) **EP 3 725 435 A1**
(43) Veröffentlichungstag der Anmeldung: **21.10.2020**
(21) Anmeldenummer: 19169883.6
(22) Anmeldetag: 17.04.2019
(51) Int. Cl.: B22F 3/105, B22F 3/24, B22F 7/06, B33Y 40/00, B22F 3/00, B33Y 80/00

(54) **HERSTELLUNG EINES METALLISCHEN GEGENSTANDS**

(71) Anmelder: Siemens Aktiengesellschaft, 80333 München (DE)
(72) Erfinder: Schuh, Carsten, 85598 Baldham (DE); Soller, Thomas, 94469 Deggendorf (DE); Vollmer, Rolf, 36129 Gersfeld (DE)

(57) **Zusammenfassung**

Um die Qualität eines additiv gefertigten metallischen Gegenstands (1) zu verbessern, wird ein Herstellungsverfahren angegeben, bei dem ein erster Grünkörper (2) aus einem ersten Material additiv gefertigt wird und der erste Grünkörper (2) mittels eines ersten thermischen Prozesses thermisch vorbehandelt wird. Ein zweiter Grünkörper (3) wird aus einem zweiten, von dem ersten Material verschiedenen, Material additiv gefertigt. Der thermisch vorbehandelte erste Grünkörper (2) und der zweite Grünkörper (3) werden gemeinsam mittels eines zweiten thermischen Prozesses behandelt, um den metallischen Gegenstand (1) zu erhalten.

## Beschreibung

Die Erfindung betrifft ein Verfahren zur Herstellung eines metallischen Gegenstands, wobei ein erster Grünkörper aus einem ersten Material additiv gefertigt wird und der erste Grünkörper mittels eines ersten thermischen Prozesses thermisch vorbehandelt wird. Ferner betrifft die Erfindung einen entsprechend hergestellten metallischen Gegenstand.

Additive Fertigungsverfahren können beispielsweise zum Drucken eines zweikomponentigen metallischen Gegenstands eingesetzt werden. Dazu werden beispielsweise zwei Grünkörper aus unterschiedlichen Materialien erzeugt und danach gemeinsam thermisch prozessiert. Aufgrund unterschiedlicher Schwindungsverläufe der unterschiedlichen Materialien kann die Qualität des erzeugten Gegenstands reduziert sein, insbesondere durch einen nicht optimalen mechanischen Zusammenhalt der beiden verschiedenen Komponenten.

Vor diesem Hintergrund ist es eine Aufgabe der vorliegenden Erfindung, ein verbessertes Konzept zur additiven Fertigung eines zweikomponentigen metallischen Gegenstands anzugeben, mit welchem eine verbesserte Qualität des Gegenstands erreicht werden kann.

Erfindungsgemäß wird diese Aufgabe durch ein Verfahren und einen metallischen Gegenstand nach den unabhängigen Ansprüchen gelöst. Vorteilhafte Weiterbildungen und weitere Ausführungsformen sind Gegenstand der abhängigen Ansprüche.

Das verbesserte Konzept beruht auf der Idee, einen ersten Grünkörper aus einem ersten Material thermisch vorzubehandeln und den thermisch vorbehandelten ersten Grünkörper mit einem zweiten Grünkörper gemeinsam thermisch zu behandeln, um den metallischen Gegenstand zu erhalten.

Gemäß einem ersten unabhängigen Aspekt des verbesserten Konzepts wird ein Verfahren zur Herstellung eines metallischen Gegenstands angegeben. Dabei wird ein erster Grünkörper aus einem ersten Material additiv gefertigt, und der erste Grünkörper wird mittels eines ersten thermischen Prozesses thermisch vorbehandelt. Ein zweiter Grünkörper wird aus einem zweiten, von dem ersten Material verschiedenen, Material additiv gefertigt. Der thermisch vorbehandelte erste Grünkörper und der zweite Grünkörper werden gemeinsam mittels eines zweiten thermischen Prozesses behandelt, um den metallischen Gegenstand zu erhalten.

Bei dem ersten und dem zweiten Grünkörper kann es sich insbesondere um Rohlinge, insbesondere thermisch unbehandelte oder nicht final thermisch behandelte Rohlinge, handeln. Insbesondere werden die mittels der additiven Fertigungsverfahren gefertigten Rohlinge sowie gegebenenfalls thermisch vorbehandelte Rohlinge als Grünkörper beziehungsweise thermisch vorbehandelte Grünkörper bezeichnet.

Jeder der Grünkörper kann aus einem Teil bestehen oder aus zwei oder mehr nicht verbundenen oder disjunkten Teilen bestehen.

Das erste Material beinhaltet insbesondere ein erstes Metall. Darüber hinaus kann das erste Material einen oder mehrere erste Zusatzstoffe, beispielsweise einen oder mehrere erste Binder, beinhalten. Das zweite Material beinhaltet insbesondere ein zweites Metall. Darüber hinaus kann das zweite Material einen oder mehrere zweite Zusatzstoffe, beispielsweise einen oder mehrere zweite Binder, beinhalten.

Durch die thermische Vorbehandlung eines Grünkörpers kann das entsprechende Material beispielsweise teilweise entbindert und vorgesintert oder teilweise gesintert werden. Die Vorsinterung kann beispielsweise eine Grundfestigkeit des thermisch vorbehandelten Grünkörpers bewirken, wobei eine Endfestigkeit des metallischen Gegenstands beziehungsweise einer aus dem Grünkörper hervorgehenden Komponente des metallischen Gegenstands direkt nach dem ersten thermischen Prozess in der Regel noch nicht gegeben ist.

Der zweite thermische Prozess entspricht beispielsweise einem zweiten Sinterprozess oder einem finalen Sinterprozess oder einem Ko-Sinterprozess des thermisch vorbehandelten ersten Grünkörpers und des zweiten Grünkörpers. Durch den zweiten thermischen Prozess kann beispielsweise eine vollständige oder im Wesentlichen vollständige Entbinderung des ersten thermisch vorbehandelten ersten Grünkörpers und des zweiten Grünkörpers erfolgen. Darüber hinaus kann durch den zweiten thermischen Prozess der Sinterprozess abgeschlossen oder fertiggestellt werden, so dass eine endgültige Festigkeit des metallischen Gegenstands beziehungsweise der ersten Komponente des metallischen Gegenstands, welche aus dem ersten Grünkörper hervorgeht, und der zweiten Komponente des metallischen Gegenstands, welche aus dem zweiten Grünkörper hervorgeht, erzielt werden.

Außerdem können der vorbehandelte erste Grünkörper und der zweite Grünkörper durch den zweiten thermischen Prozess fest miteinander verbunden werden.

Unter der additiven Fertigung des ersten Grünkörpers aus dem ersten Material kann beispielsweise verstanden werden, dass der erste Grünkörper mittels Schritten oder Teilschritten eines additiven Fertigungsverfahrens unter Verwendung des ersten Materials gefertigt wird. Soweit das additive Fertigungsverfahren in einem anderen Kontext Sinterschritte beinhaltet, sind diese nach dem hier vorliegenden Verständnis beispielsweise nicht von dem Schritt der additiven Fertigung des ersten Grünkörpers umfasst. Für den zweiten Grünkörper gilt das Gesagte analog.

Darunter, dass mittels der Behandlung durch den zweiten Prozess der metallische Gegenstand erhalten wird, kann beispielsweise verstanden werden, dass nach Abschluss des zweiten thermischen Prozesses eine erste Komponente vorliegt, welche aus dem ersten Grünkörper entstanden ist, sowie eine zweite Komponente, welche aus dem zweiten Grünkörper entstanden ist, und die beiden Komponenten fest miteinander verbunden sind.

Insbesondere können das erste und das zweite Material während einer thermischen Behandlung ein unterschiedliches Verhalten, insbesondere ein unterschiedliches Schwindungsverhalten, beispielsweise als Funktion einer Prozesstemperatur oder der Zeit aufweisen. Das heißt, würde man das erste Material und das zweite Material einer fiktiven identischen thermischen Behandlung oder Sinterung unterziehen, könnte das erste Material eine andere Gesamtschwindung, also ein anderes relatives Gesamtschwindungsvolumen, als das zweite Material aufweisen. Außerdem oder stattdessen kann ein Schwindungsverlauf des ersten Materials als Funktion der Zeit bei sonst identischen Prozessbedingungen von dem Schwindungsverlauf des zweiten Materials abweichen. Stattdessen oder zusätzlich kann eine Schwindungsrate des ersten Materials eine andere Temperaturabhängigkeit als eine Schwindungsrate des zweiten Materials aufweisen.

Durch die thermische Vorbehandlung des ersten Grünkörpers gemäß eines Verfahrens nach dem verbesserten Konzept und die damit einhergehende vorweggenommene teilweise Schwindung des ersten Grünkörpers können unterschiedliche Schwindungsverhalten und -verläufe des ersten Materials und des zweiten Materials, insbesondere des ersten und des zweiten Grünkörpers, wenigstens teilweise kompensiert oder einander angeglichen werden. Dies hat zur Folge, dass die Unterschiede im jeweiligen Schwindungsverhalten der beiden Materialien beziehungsweise der beiden Grünkörper während des zweiten thermischen Prozesses geringer ausfallen als dies ohne die thermische Vorbehandlung des ersten Grünkörpers der Fall wäre.

Entsprechend kann ein Zusammenhalt der beiden Komponenten des metallischen Gegenstands nach Abschluss des zweiten thermischen Prozesses im Vergleich zu bekannten Verfahren verbessert werden. Der resultierende metallische Gegenstand weist somit eine verbesserte Qualität, insbesondere weniger Verzug, einen verbesserten Gesamtzusammenhalt sowie eine höhere Dichte auf.

Durch die teilweise Vorwegnahme der Schwindung des ersten Grünkörpers können auch ansonsten gegebenenfalls inkompatible Bindersysteme für das erste Material beziehungsweise das zweite Material verwendet werden.

Durch die teilweise Separation der einzelnen Verfahrensschritte kann gegebenenfalls auch eine Parallelisierung einzelner Prozessschritte ermöglicht werden, was beispielsweise zu einer besseren Maschinenauslastung und/oder kürzeren Herstellungszeiten des metallischen Gegenstands führen kann.

Gemäß zumindest einer Ausgestaltungsform des Verfahrens wird der erste Grünkörper auf einem Substrat additiv gefertigt und der zweite Grünkörper nach der thermischen Vorbehandlung des ersten Grünkörpers auf dem Substrat, insbesondere auf demselben Substrat, additiv gefertigt.

Dadurch ergibt sich ein besonders einfacher Prozessablauf, da nur ein Substrat erforderlich ist. Ferner sind in diesem Fall keine separaten Fügeschritte erforderlich, um die Grünkörper beziehungsweise die Komponenten des metallischen Gegenstands miteinander zu verbinden. Vielmehr erfolgt die Verbindung des ersten vorbehandelten Grünkörpers und des zweiten Grünkörpers durch das Sintern mittels des zweiten thermischen Prozesses.

Das Substrat kann beispielsweise einer Unterlage entsprechen oder eine Unterlage beinhalten, auf welche das erste Material beispielsweise als erste Materialpaste aufgebracht wird, um den ersten Grünkörper zu formen. Der zweite Grünkörper wird beispielsweise geformt, indem das zweite Material nach der thermischen Vorbehandlung des ersten Grünkörpers beispielsweise als zweite Materialpaste auf dieselbe Unterlagen aufgebracht wird, insbesondere wenigstens teilweise neben dem oder angrenzend an den thermisch vorbehandelten ersten Grünkörper und/oder wenigstens teilweise auf dem thermisch vorbehandelten ersten Grünkörper.

Gemäß zumindest einer Ausführungsform wird der erste Grünkörper auf einem ersten Substrat additiv gefertigt. Der zweite Grünkörper wird auf einem zweiten Substrat additiv gefertigt. Der zweite Grünkörper wird mittels eines weiteren thermischen Prozesses thermisch vorbehandelt. Der thermisch vorbehandelte erste Grünkörper und der thermisch vorbehandelte zweite Grünkörper werden gemeinsam mittels des zweiten thermischen Prozesses behandelt, um den metallischen Gegenstand zu erhalten.

Solche Ausführungsformen haben den Vorteil, dass die gesamten thermischen Prozesszeiten oder Gesamtsinterzeiten des ersten und des zweiten Grünkörpers grundsätzlich unabhängig voneinander eingestellt werden können. Bei einer Fertigung beider Grünkörper auf demselben Substrat ergibt sich zwingend, dass eine Gesamtsinterzeit des ersten Grünkörpers länger ist als eine Gesamtsinterzeit des zweiten Grünkörpers. Dies ist in Ausführungsformen, in denen zwei verschiedene Substrate verwendet werden, nicht der Fall.

Außerdem ist insbesondere in solchen Ausführungsformen eine Parallelisierung von Verfahrensschritten möglich, beispielsweise eine Parallelisierung des ersten thermischen Prozesses und des weiteren thermischen Prozesses zur thermischen Vorbehandlung des ersten und des zweiten Grünkörpers.

Gemäß zumindest einer Ausführungsform, insbesondere einer Ausführungsform, bei welcher der erste Grünkörper auf dem ersten Substrat und der zweite Grünkörper auf dem zweiten Substrat gefertigt wird, werden der thermisch vorbehandelte erste Grünkörper und der thermisch vorbehandelte zweite Grünkörper vor der Behandlung mittels des zweiten thermischen Prozesses durch Fügen miteinander verbunden.

In solchen Ausführungsformen kann das Fügen beispielsweise zu einer Grundfestigkeit einer Verbindung zwischen den vorbehandelten Grünkörpern führen. Die endgültige Festigkeit kann dann durch den zweiten thermischen Prozess erzielt werden.

Insbesondere kann durch das Fügen oder das Fügen in Verbindung mit dem zweiten thermischen Prozess eine unlösbare Verbindung zwischen der ersten und der zweiten Komponente erzielt werden.

Durch das Fügen kann gegebenenfalls eine höhere Verbindungsfestigkeit erzielt werden als dies durch das Sintern mittels des zweiten thermischen Prozesses allein möglich wäre, insbesondere, wenn beide Grünkörper vor dem zweiten thermischen Prozess thermisch vorbehandelt wurden.

Das Fügen kann beispielsweise ein Umformen, insbesondere Kaltumformen, des ersten und/oder des zweiten thermisch vorbehandelten Grünkörpers beinhalten.

Gemäß zumindest einer Ausführungsform wird der erste Grünkörper durch das Fügen plastisch verformt.

Gemäß zumindest einer Ausführungsform wird der zweite Grünkörper durch das Fügen plastisch verformt.

Durch die plastische Verformung des ersten und/oder des zweiten Grünkörpers kann insbesondere eine Verbindung der thermisch vorbehandelten Grünkörper ohne weitere Verbindungsmaterialien erreicht werden.

Gemäß zumindest einer Ausführungsform ist ein Schwindungsverlauf des thermisch vorbehandelten ersten Grünkörpers während des zweiten thermischen Prozesses im Wesentlichen gleich oder gleich einem Schwindungsverlauf des zweiten Grünkörpers oder des zweiten thermisch vorbehandelten Grünkörpers während des zweiten thermischen Prozesses.

Dabei kann "im Wesentlichen" derart verstanden werden, dass eventuell verbleibende Unterschiede in den Schwindungsverläufen sich nicht in einer Reduktion einer Verbindungsfestigkeit der beiden Komponenten des metallischen Gegenstands widerspiegeln, die über einen vorgegebenen Toleranzbereich hinausgeht.

Ein Schwindungsverlauf beinhaltet insbesondere eine relative Volumenänderung oder eine absolute Volumenänderung des jeweiligen Grünkörpers oder thermisch vorbehandelten Grünkörpers als Funktion der Zeit bei einem Temperaturprofil oder Temperaturverlauf des zweiten thermischen Prozesses.

Die Übereinstimmung der Schwindungsverläufe kann beispielsweise durch entsprechende Auswahl oder Anpassung von Materialzusammensetzungen des ersten und/oder des zweiten Materials erreicht werden. Beispielsweise kann durch die Auswahl der Binder des ersten und/oder zweiten Materials und/oder durch den Zusatz eines Sinterhilfsmittels zu dem ersten und/oder zweiten Material ein Verdichtungsverhalten und damit der Schwindungsverlauf des ersten und/oder zweiten Grünkörpers angepasst werden.

Alternativ oder zusätzlich kann eine Partikelgrößenverteilung von Metallpartikeln des ersten Materials oder eine Partikelgrößenverteilung von Metallpartikeln des zweiten Materials angepasst werden, um das Verdichtungsverhalten und entsprechend den Schwindungsverlauf des jeweiligen Materials beziehungsweise Grünkörpers anzupassen.

Alternativ oder zusätzlich sind die Vorbehandlungsdauern, also die Prozessdauern des ersten thermischen Prozesses und/oder des weiteren thermischen Prozesses mögliche Parameter zur Anpassung der Schwindungsverläufe im zweiten thermischen Prozess.

Im Einzelfall ist je nach Materialzusammensetzung des ersten und des zweiten Materials beziehungsweise je nach gewünschter Zusammensetzung des metallischen Gegenstands beziehungsweise der ersten und der zweiten Komponente des metallischen Gegenstands eine angepasste Lösung oder Kombination der genannten Möglichkeiten anwendbar.

Durch die Anpassung der Schwindungsverläufe aneinander, sodass im zweiten thermischen Prozess die Schwindungsverläufe im Wesentlichen gleich sind, kann eine gleichmäßige Schwindung des ersten und zweiten Grünkörpers während des zweiten thermischen Prozesses erreicht werden, was zu einem besseren Zusammenhalt, einer höheren Verbindungsfestigkeit der ersten und der zweiten Komponente des metallischen Gegenstands beziehungsweise zu einem geringeren Verzug und zu einer höheren Dichte des metallischen Gegenstands führen kann.

Gemäß zumindest einer Ausführungsform wird als erstes Material zur Fertigung des ersten Grünkörpers eine erste Materialpaste verwendet, welche erste Metallpartikel enthält, also Partikel eines ersten Metalls, also eine erste Metallpaste. Als zweites Material zur Fertigung des zweiten Grünkörpers wird eine zweite Materialpaste verwendet, welche zweite Metallpartikel, also Partikel eines zweiten Metalls, enthält, also eine zweite Metallpaste.

Als Paste kann dabei eine Suspension verstanden werden, welche die jeweiligen Metallpartikel sowie den entsprechenden Binder enthält und deren Konsistenz beispielweise streichbar, streichfest oder pastös ist, insbesondere derart, dass die Paste mittels eines Schablonendruckverfahrens verarbeitet werden kann.

Die ersten Metallpartikel unterscheiden sich beispielsweise von den zweiten Metallpartikeln. Insbesondere enthalten die ersten Metallpartikel Partikel aus einem oder mehreren verschiedenen ersten Metallen oder Metalllegierungen. Die zweiten Metallpartikel enthalten Metallpartikel aus einem oder mehreren zweiten Metallen oder Metalllegierungen. Die ersten und die zweiten Metalle unterscheiden sich dabei beispielsweise zumindest teilweise.

Durch die Verwendung von Materialpasten können zum einen Schablonendruckverfahren als additive Fertigungsverfahren eingesetzt werden, um die Grünkörper zu fertigen. Zum anderen können damit metallische, beispielsweise magnetische oder nicht-magnetische, erste und zweite Komponenten des metallischen Gegenstands erzeugt werden.

Solche Konstruktionen aus metallischen und/oder nicht metallischen Komponenten können insbesondere als oder für Elektrobleche elektrischer Maschinen verwendbar sein.

Gemäß zumindest einer Ausführungsform werden als erste Metallpartikel ferromagnetische Metallpartikel verwendet und als zweite Metallpartikel werden nicht-magnetische Metallpartikel verwendet.

Gemäß zumindest einer Ausführungsform werden als erste Metallpartikel nicht-magnetische Metallpartikel verwendet und als zweite Metallpartikel ferromagnetische Metallpartikel verwendet.

Aus solchen Ausführungsformen resultiert ein metallischer Gegenstand, dessen erste Komponente ferromagnetisch ist und dessen zweite Komponente nicht-magnetisch ist oder umgekehrt.

Solche Gegenstände können beispielsweise vorteilhaft als Elektrobleche für elektrische Maschinen, beispielsweise für Reluktanzmotoren, eingesetzt werden.

Gemäß zumindest einer Ausführungsform werden als erste und als zweite Metallpartikel jeweils nicht-magnetische Metallpartikel oder jeweils ferromagnetische Metallpartikel verwendet.

Gemäß zumindest einer Ausführungsform weisen die ersten Metallpartikel in der ersten Materialpaste eine multimodale, insbesondere eine bimodale oder eine trimodale, Partikelgrößenverteilung auf.

Durch die multimodale Partikelgrößenverteilung kann ein mehrstufiges Verdichtungsverhalten des ersten Materials erzielt werden und ein entsprechendes mehrstufiges Schwindungsverhalten. Ein solches mehrstufiges Schwindungsverhalten kann mit Vorteil zur Anpassung des Schwindungsverhaltens des ersten Materials an das Schwindungsverhalten des zweiten Materials ausgenutzt werden. So kann beispielsweise bei einer bimodalen Partikelgrößenverteilung ein zweistufiges Verdichtungs- und Schwindungsverhalten und bei einer trimodalen Partikelgrößenverteilung entsprechend ein dreistufiges Verdichtungs- und Schwindungsverhalten erzielt werden.

Gemäß zumindest einer Ausführungsform weisen die zweiten Metallpartikel in der zweiten Materialpaste eine unimodale oder eine multimodale, insbesondere eine bimodale oder trimodale, Partikelgrößenverteilung auf.

Gemäß zumindest einer Ausführungsform beinhaltet der erste thermische Prozess eine Bestrahlung des ersten Grünkörpers mit einer Mikrowellenstrahlung oder einer Infrarotstrahlung.

Gemäß zumindest einer Ausführungsform beinhaltet der weitere thermische Prozess eine Bestrahlung des zweiten Grünkörpers mit Mikrowellenstrahlung oder Infrarotstrahlung.

Gemäß zumindest einer Ausführungsform beinhaltet der zweite thermische Prozess eine Bestrahlung des thermisch vorbehandelten ersten Grünkörpers und des zweiten Grünkörpers oder des zweiten vorbehandelten Grünkörpers mit Mikrowellenstrahlung oder Infrarotstrahlung.

Mittels Mikrowellenstrahlung oder Infrarotstrahlung können eine effiziente und steuerbare Entbinderung und Vorsinterung beziehungsweise Sinterung erzielt werden.

Gemäß zumindest einer Ausführungsform wird der erste Grünkörper mittels eines ersten Sieb- oder Schablonendruckverfahrens aus dem ersten Material additiv gefertigt.

Gemäß zumindest einer Ausführungsform wird der zweite Grünkörper mittels eines zweiten Sieb- oder Schablonendruckverfahrens aus dem zweiten Material additiv gefertigt.

Die Sieb- oder Schablonendruckverfahren sind insbesondere dreidimensionale Sieb- oder Schablonendruckverfahren.

Sieb- oder Schablonendruckverfahren zur dreidimensionalen additiven Fertigung eignen sich gut zur Herstellung metallischer, magnetischer oder nicht-magnetischer, Gegenstände. Insbesondere Komponenten von Blechen oder Elektroblechen für elektrische Maschinen können gut mittels Sieb- oder Schablonendruckverfahren hergestellt werden.

Gemäß zumindest einer Ausführungsform wird der metallische Gegenstand als Elektroblech für eine elektrische Maschine hergestellt.

Das bedeutet, bei dem metallischen Gegenstand handelt es sich um ein Elektroblech für eine elektrische Maschine.

Gemäß einem zweiten unabhängigen Aspekt des verbesserten Konzepts wird ein metallischer Gegenstand angegeben, der mittels eines Verfahrens nach dem verbesserten Konzept hergestellt ist und insbesondere als Elektroblech für eine elektrische Maschine, beispielsweise für einen elektrischen Generator oder einen elektrischen Motor, insbesondere für einen Reluktanzmotor, ausgebildet ist.

Die Erfindung wird im Folgenden anhand konkreter Ausführungsbeispiele und zugehöriger schematischer Zeichnungen näher erläutert. In den Figuren sind gleiche oder funktionsgleiche Elemente mit gleichen Bezugszeichen versehen. Die Beschreibung gleicher oder funktionsgleicher Elemente wird gegebenenfalls nicht notwendigerweise in verschiedenen Figuren wiederholt.

In den Figuren zeigen
- FIG 1, FIG 2,: Verfahrensschritte einer beispielhaften
- FIG 3 und FIG 4: Ausführungsform eines Verfahrens nach dem verbesserten Konzept; und
- FIG 5, FIG 6,: Verfahrensschritte einer weiteren
- FIG 7, FIG 8,: beispielhaften Ausführungsform eines
- FIG 9 und FIG 10: Verfahrens nach dem verbesserten Konzept.

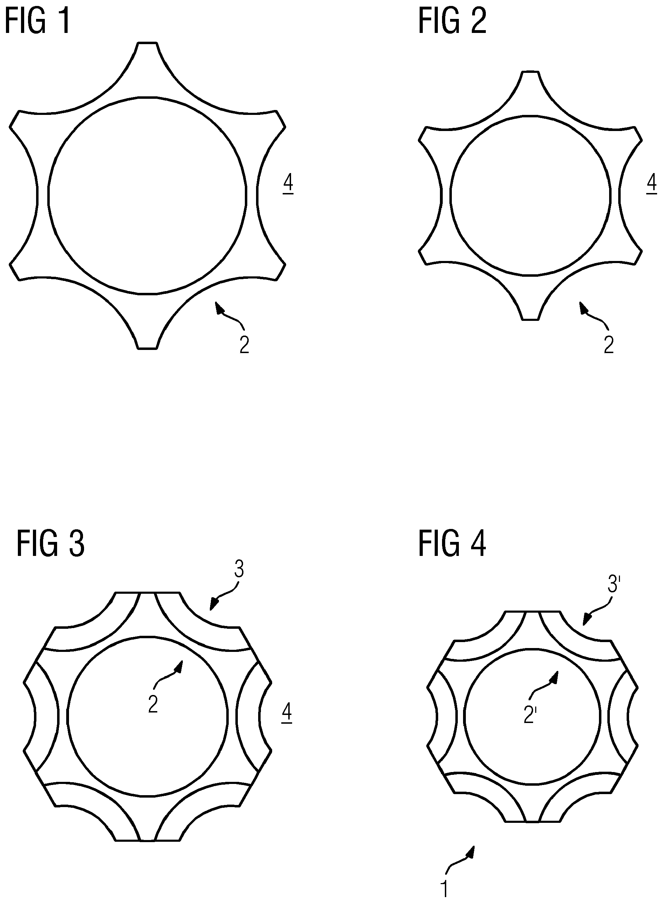

In den Figuren FIG 1 bis FIG 4 sind Verfahrensschritte einer beispielhaften Ausführungsform eines Verfahrens zur Herstellung eines magnetischen Gegenstands 1, im gezeigten Beispiel eines Elektroblechs für eine elektrische Maschine, gezeigt.

In FIG 1 wird ein erster Grünkörper 2 mittels einer ersten Metallpaste in einem dreidimensionalen Schablonendruckverfahren additiv auf einem Substrat 4 gefertigt. Beispielsweise beinhaltet die erste Metallpaste nicht-magnetische Metallpartikel.

Der erste Grünkörper 2 wird dann mittels eines ersten Sinterprozesses vorgesintert. Dabei verändert sich das Volumen des ersten Grünkörpers 2 gemäß eines entsprechenden Schwindungsverlaufs.

In FIG 2 ist der vorgesinterte erste Grünkörper 2 gezeigt, dessen Volumen und Ausdehnung gegenüber dem in FIG 1 gezeigten Grünkörper 2 verkleinert ist. Es wird darauf hingewiesen, dass die gezeigte Schwindung nicht notwendigerweise maßstabsgetreu ist. Dies gilt auch für die restlichen Figuren.

In FIG 3 ist ein zweiter Grünkörper 3 gezeigt, der mittels einer zweiten Metallpaste durch ein weiteres Schablonendruckverfahren auf dasselbe Substrat 4 additiv gefertigt wurde.

Beispielsweise beinhaltet die zweite Metallpaste ferromagnetische Metallpartikel.

Das Substrat 4 mit dem vorgesinterten ersten Grünkörper 2 und dem zweiten Grünkörper 3 wird dann mittels eines zweiten Sinterprozesses final thermisch behandelt beziehungsweise final gesintert und entbindert.

In FIG 4 ist der dadurch resultierende metallische Gegenstand 1 in seiner finalen Form gezeigt.

Insbesondere weist der metallische Gegenstand 1 eine erste Komponente 2' auf, welche aus dem ersten Grünkörper 2 hervorgeht, sowie eine zweite Komponente 3', welche aus dem zweiten Grünkörper hervorgeht.

Durch die Vorsinterung des ersten Grünkörpers 2 wird beispielsweise erzielt, dass in dem zweiten Sinterprozess die Schwindungsverläufe des vorgesinterten ersten Grünkörpers 2 und des zweiten Grünkörpers 3 näherungsweise gleich oder jedenfalls weniger unterschiedlich sind als dies ohne Vorsinterung des ersten Grünkörpers 2 der Fall wäre.

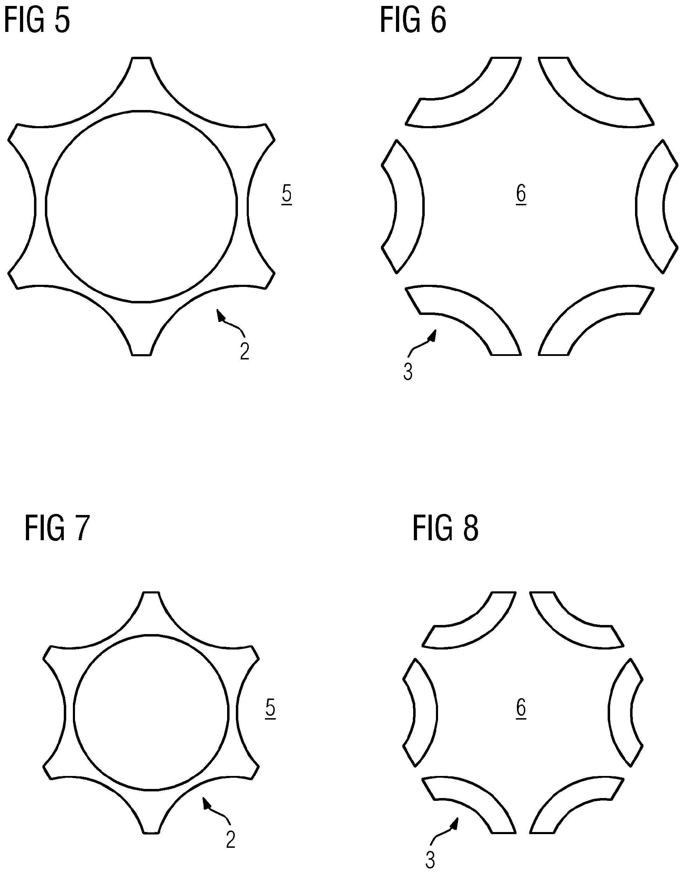

Optional kann beispielsweise die erste Metallpaste eine bimodale oder trimodale Partikelgrößenverteilung der ersten Metallpartikel aufweisen, um dadurch eine zwei- oder dreistufige Verdichtungskurve des ersten Materials beziehungsweise der ersten Metallpaste zu erzielen und den Schwindungsverlauf beziehungsweise das Verdichtungsverhalten noch besser an den zweiten Grünkörper 3 anzupassen. Dies gilt auch für die bezüglich FIG 5 bis FIG 10 beschriebene Ausführungsform.

In den Figuren FIG 5 bis FIG 10 sind Verfahrensschritte einer weiteren beispielhaften Ausführungsform eines Verfahrens zur Herstellung eines metallischen Gegenstands nach dem verbesserten Konzept gezeigt. Als Beispiel wurde derselbe metallische Gegenstand wie in den Figuren FIG 1 bis FIG 4 dargestellt.

In FIG 5 ist der erste Grünkörper 2 gezeigt, wie er auf ein erstes Substrat 5 mittels dreidimensionalem Schablonendruck gefertigt wurde. Es wird auf die Ausführungen zu FIG 1 verwiesen.

In FIG 6 ist der zweite Grünkörper 3 gezeigt, der in diesem Ausführungsbeispiel auf ein separates zweites Substrat 6 gefertigt wurde.

Insbesondere können der erste und der zweite Grünkörper 2, 3 unabhängig voneinander, beispielsweise auf unterschiedlichen Anlagen, gefertigt werden.

Nach der Fertigung der Grünkörper 2, 3 wird der erste Grünkörper 2 in einem ersten Vorsinterverfahren vorgesintert, was zu einer Schwindung des ersten Grünkörpers 2 führt, wie in FIG 7 dargestellt.

Der zweite Grünkörper 3 wird unabhängig von dem ersten Grünkörper 2 ebenfalls in einem weiteren Vorsinterprozess vorgesintert, was zu einer Schwindung des zweiten Grünkörpers 3 führt, wie in Figur FIG 8 dargestellt.

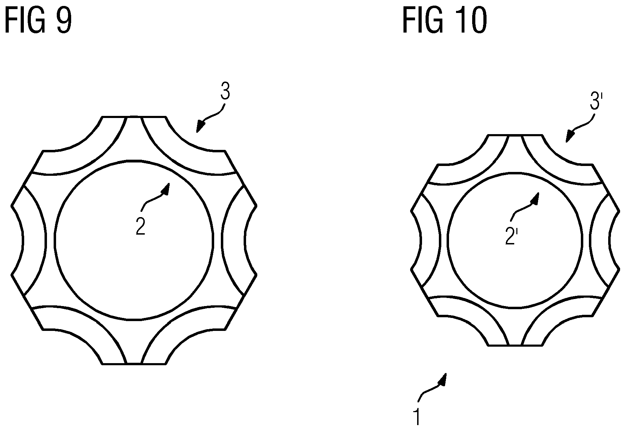

Nach der Vorsinterung der Grünkörper 2, 3 werden diese zusammengefügt, wie in FIG 9 gezeigt.

Dazu können die einzelnen Teile des zweiten Grünkörpers 3 und/oder der erste Grünkörper 2 plastisch verformt werden, um die Grünkörper 2, 3 zu fügen.

Beide vorgesinterten Grünkörper 2, 3 werden dann in einem finalen Sinterprozess ebenfalls gemeinsam gesintert, um den metallischen Gegenstand 1 zu erhalten, wie in FIG 10 dargestellt.

Durch die Vorsinterung sowohl des ersten Grünkörpers 2 als auch des zweiten Grünkörpers 3 können die Gesamtsinterdauern der beiden Grünkörper 2, 3 beziehungsweise Komponenten 2', 3' des metallischen Gegenstands 1 unabhängig voneinander eingestellt werden.

Auch hier ist eine bi- oder trimodale Partikelgrößenverteilung der ersten oder zweiten Metallpartikel optional möglich, um das jeweilige Schwindungsverhalten der vorgesinterten Grünkörper 2, 3 während des zweiten und finalen Sinterprozesses aneinander anzupassen.

Von dem verbesserten Konzept profitieren vor allem zweikomponentige Metallstrukturen. Insbesondere können Probleme durch die thermischen Prozessschritte aufgrund unterschiedlicher Schwindungsverläufe der verwendeten Metallpartikel oder Metallpulver durch das verbesserte Konzept vermindert oder verhindert werden.

Nach dem verbesserten Konzept können mit Vorteil unterschiedlich gut sinterbare Werkstücke so miteinander kombiniert werden, dass ein verzugsfreier und dichter Kompositkörper als metallischer Gegenstand entsteht.

Je nach Erfordernissen können unterschiedliche, grundsätzlich miteinander inkompatible Bindersysteme für jedes der Materialien verwendet werden, um den additiven Fertigungsvorgang, beispielsweise Schablonendruckvorgang, und das Ergebnis des Druckbildes, wie beispielsweise eine Kantensteilheit, eine Design-Treue, eine Gründichte, etc. zu verbessern oder zu optimieren.

## Patentansprüche

1. Verfahren zur Herstellung eines metallischen Gegenstands (1), wobei ein erster Grünkörper (2) aus einem ersten Material additiv gefertigt wird;
**dadurch gekennzeichnet, dass**
der erste Grünkörper (2) mittels eines ersten thermischen Prozesses thermisch vorbehandelt wird;
ein zweiter Grünkörper (3) aus einem zweiten, von dem ersten Material verschiedenen, Material additiv gefertigt wird;
der thermisch vorbehandelte erste Grünkörper (2) und der zweite Grünkörper (3) gemeinsam mittels eines zweiten thermischen Prozesses behandelt werden, um den metallischen Gegenstand (1) zu erhalten.

2. Verfahren nach Anspruch 1,
**dadurch gekennzeichnet, dass**
der erste Grünkörper (2) auf einem Substrat (4) additiv gefertigt wird; und
der zweite Grünkörper (3) nach der thermischen Vorbehandlung des ersten Grünkörpers (2) auf dem Substrat (4) additiv gefertigt wird.

3. Verfahren nach Anspruch 1,
**dadurch gekennzeichnet, dass**
der erste Grünkörper (2) auf einem ersten Substrat (5) additiv gefertigt wird;
der zweite Grünkörper (3) auf einem zweiten Substrat (6) additiv gefertigt wird;
der zweite Grünkörper (3) mittels eines weiteren thermischen Prozesses thermisch vorbehandelt wird; und
der thermisch vorbehandelte erste Grünkörper (2) und der thermisch vorbehandelte zweite Grünkörper (3) gemeinsam mittels des zweiten thermischen Prozesses behandelt werden, um den metallischen Gegenstand (1) zu erhalten.

4. Verfahren nach Anspruch 3,
**dadurch gekennzeichnet, dass**
der thermisch vorbehandelte erste Grünkörper (2) und der thermisch vorbehandelte zweite Grünkörper (3) vor der Behandlung mittels des zweiten thermischen Prozesses durch Fügen verbunden werden.

5. Verfahren nach Anspruch 4,
**dadurch gekennzeichnet, dass**
der erste Grünkörper (2) durch das Fügen plastisch verformt wird und/oder der zweite Grünkörper (3) durch das Fügen plastisch verformt wird.

6. Verfahren nach einem der Ansprüche 1 bis 5,
**dadurch gekennzeichnet, dass**
ein Schwindungsverlauf des thermisch vorbehandelten ersten Grünkörpers (2) während des zweiten thermischen Prozesses im Wesentlichen gleich einem Schwindungsverlauf des zweiten Grünkörpers (3) während des zweiten thermischen Prozesses ist.

7. Verfahren nach einem der Ansprüche 1 bis 6,
**dadurch gekennzeichnet, dass**
als erstes Material zur Fertigung des ersten Grünkörpers (2) eine erste Materialpaste verwendet wird, welche erste Metallpartikel enthält; und
als zweites Material zur Fertigung des zweiten Grünkörpers (3) eine zweite Materialpaste verwendet wird, welche zweite Metallpartikel enthält

8. Verfahren nach Anspruch 7,
**dadurch gekennzeichnet, dass**
als erste Metallpartikel oder als zweite Metallpartikel ferromagnetische Metallpartikel verwendet werden.

9. Verfahren nach einem der Ansprüche 7 oder 8,
**dadurch gekennzeichnet, dass**
die ersten Metallpartikel in der ersten Materialpaste eine multimodale Partikelgrößenverteilung aufweisen.

10. Verfahren nach einem der Ansprüche 1 bis 9,
**dadurch gekennzeichnet, dass**
der erste thermische Prozess eine Bestrahlung des ersten Grünkörpers (2) mit Mikrowellenstrahlung oder Infrarotstrahlung beinhaltet; und/oder
der zweite thermische Prozess eine Bestrahlung des thermisch vorbehandelten ersten Grünkörpers (2) und des zweiten Grünkörpers (3) mit Mikrowellenstrahlung oder Infrarotstrahlung beinhaltet.

11. Verfahren nach einem der Ansprüche 1 bis 10,
**dadurch gekennzeichnet, dass**
der erste Grünkörper (2) mittels eines Sieb- oder Schablonendruckverfahrens aus dem ersten Material additiv gefertigt wird; und/oder
der zweite Grünkörper (3) mittels eines Sieb- oder Schablonendruckverfahrens aus dem zweiten Material additiv gefertigt wird.

12. Verfahren nach einem der Ansprüche 1 bis 11,
**dadurch gekennzeichnet, dass**
der metallische Gegenstand (1) als Elektroblech für eine elektrische Maschine hergestellt wird.

13. Metallischer Gegenstand, hergestellt mittels eines Verfahrens nach Anspruch 12.

14. Metallischer Gegenstand nach Anspruch 13, der als Elektroblech (1) für eine elektrische Maschine ausgebildet ist.
